(19) Europäisches Patentamt
European Patent Office
Office européen des brevets

(11) EP 2 419 710 B1

(12) **EUROPÄISCHE PATENTSCHRIFT**

(45) Veröffentlichungstag und Bekanntmachung des Hinweises auf die Patenterteilung:
**13.02.2013 Patentblatt 2013/07**

(21) Anmeldenummer: **10716521.9**

(22) Anmeldetag: **15.04.2010**

(51) Int Cl.:
*G01N 21/17* (2006.01)     *G01N 29/24* (2006.01)

(86) Internationale Anmeldenummer:
**PCT/EP2010/054954**

(87) Internationale Veröffentlichungsnummer:
**WO 2010/119094 (21.10.2010 Gazette 2010/42)**

(54) **ULTRASCHALLPRÜFSYSTEM**

ULTRASONIC TESTING SYSTEM

SYSTÈME DE TEST PAR ULTRASONS

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **15.04.2009 DE 102009017106**

(43) Veröffentlichungstag der Anmeldung:
**22.02.2012 Patentblatt 2012/08**

(73) Patentinhaber:
• **Oberhoff, Dietmar**
  **42799 Leichlingen (DE)**
• **Flohr, Guido**
  **50354 Hürth (DE)**

(72) Erfinder:
• **Oberhoff, Dietmar**
  **42799 Leichlingen (DE)**
• **Flohr, Guido**
  **50354 Hürth (DE)**

(74) Vertreter: **Cohausz & Florack**
**Patent- und Rechtsanwälte**
**Partnerschaftsgesellschaft**
**Bleichstraße 14**
**40211 Düsseldorf (DE)**

(56) Entgegenhaltungen:
EP-A2- 1 679 513     US-A- 3 782 177
US-A- 4 353 256     US-A- 4 567 769
US-A- 4 633 715     US-A- 5 137 361
US-A- 5 616 865     US-A1- 2003 089 183
US-B1- 6 543 288

• PIERCE S G ET AL: "SYNCHRONIZED TRIGGERING FOR ULTRASONIC TRANSIENT DETECTION USING OPTICAL FIBRE INTERFEROMETERS AND APPLICATION TO THE MEASUREMENT OF BROADBAND LAMB WAVE DISPERSION CHARACTERISTICS", MEASUREMENT SCIENCE AND TECHNOLOGY, IOP, BRISTOL, GB, Bd. 7, Nr. 11, 1. November 1996 (1996-11-01), Seiten 1665-1667, XP000681430, ISSN: 0957-0233, DOI: DOI: 10.1088/0957-0233/7/11/016

• BHATIA V ET AL: "Optical fiber sensing technique for edge-induced and internal delamination detection in composites", SMART MATERIALS AND STRUCTURES, IOP PUBLISHING LTD., BRISTOL, GB, Bd. 4, Nr. 3, 1. September 1995 (1995-09-01), Seiten 164-169, XP020072271, ISSN: 0964-1726, DOI: DOI: 10.1088/0964-1726/4/3/002

EP 2 419 710 B1

**Beschreibung**

Die Erfindung betrifft ein Ultraschallprüfsystem mit mindestens einer Sendeeinheit und mindestens einer Empfängereinheit, eine Sendeeinrichtung für ein Ultraschallprüfsystem zum Prüfen eines Prüfobjekts, mit mindestens einer Sendeeinheit, ein Empfangssystem für ein Ultraschallprüfsystem zum Prüfen eines Prüfobjekts, mit einem Laser zum Beleuchten von mindestens zwei Messbereichen auf der Oberfläche des Prüfobjekts und mit mindestens zwei Empfängereinheiten zum optischen Messen der Schwingung der Oberfläche des Prüfobjekts sowie ein Verfahren zum Betreiben eines Ultraschallprüfsystems.

Im Rahmen des Qualitätsmanagements von Stahl- und anderen metallischen Erzeugnissen eröffnen die Methoden der zerstörungsfreien Ultraschallprüfung und Messtechnik ein wesentliches Potential der Qualitätsverbesserung. Bei der Ultraschallprüfung wird im Prüfkörper eine Ultraschallwelle erzeugt und aus der Laufzeit des Schallsignals und ggf. auftretender Störsignale, insbesondere Echos von Fehlstellen, können Banddicke und ggf. Störstellen im Material oder an der Oberfläche des Prüfkörpers festgestellt werden. Eine solche zuverlässige Online-Prüfung auf mögliche Innen- und Oberflächenfehler bzw. die Wanddickenmessung während des Produktionsprozesses führt zu einem großen ökonomischen Vorteil. Frühzeitig ermittelte Informationen über den Zustand des Produktes gewährleisten nicht nur die Qualität des Fertigerzeugnisses, sondern erlauben darüber hinaus fertigungslenkende Maßnahmen, wodurch Produktivität und Qualität bei der Weiterverarbeitung wesentlich gesteigert und die Sicherheit des Personals im Produktionsprozess erhöht werden können.

Bei heißen oder schnell bewegten Produkten ist die konventionelle Prüfung mit piezo-elektrischen Ultraschall-Prüfköpfen nicht möglich. Alternative Verfahren, z.B. Laser-Ultraschall oder Electro-Magnetic-Accoustic-Transducer (EMAT-Prüftechnik), sind entweder sehr teuer oder bei freien Ultraschallwellen nicht empfindlich genug.

Bei der Prüfung kalter Materialien z.B. der Grobblechprüfung wird diese Prüfung konventionell mit sehr vielen Piezoprüfköpfen mit Wasserspalt Ankopplung durchgeführt. Der aparative bzw. elektronische Aufwand hierbei ist sehr hoch. Durch z.B. Fett- oder Ölflekken an der Oberfläche bzw. andere Verunreinigungen oder unebene Oberflächen kann die Ankopplung abreißen oder sich verändern was häufiger zu Pseudofehleranzeigen führt.

Typische Parameter von gewalzten Grobblechen sind:

Material: Kohlenstoff und niedrig legierte hochfeste Stähle
Blechdicke: 5mm - 80mm, insbesondere auch bis 100mm oder 150mm

Blechbreite: 1.000mm - 3.600mm
Blechlänge: 5.000mm - 36.000mm
Blechtemperatur: ca. 5°C - 110°C
Blechbiegung: ca. 15mm/lm - 50mm/lm
Testgeschwindigkeit: max. 1m/s
Oberflächeneigenschaft: Unter Produktionsbedingungen können viele verschiedene Oberflächenbeschädigungen, z.B. raue Stellen, kleinwellige Unebenheiten, Öl- und Fettflecken, Roststellen usw., auftreten, die zu Fehlanzeigen, insbesondere bis zu ca. 95%, bei der Ultraschall-Prüfung mit der Piezo-Prüftechnik führen können.

Zur Ultraschallwerkstoffprüfung bzw. Ultraschallwanddickenmessung von metallischem Material werden neuerdings für bestimmte Probleme Laseroptische Ultraschallsende- und Empfangssysteme benutzt.

Unter Laserultraschall versteht man ein berührungsfreies Ultraschall-Mess- und Prüfverfahren, gekennzeichnet durch die Ultraschallanregung mittels eines kurzen Laserpulses in Verbindung mit dem optischen - in aller Regel interferometrischen - Nachweis der Ultraschallauslenkung. Fällt ein Laserpuls von typischerweise einigen Nanosekunden Dauer auf eine Materialoberfläche, so wird ein Teil seiner Energie absorbiert, der Rest transmittiert oder reflektiert. Die absorbierte Energie wird zum größten Teil in Wärme umgesetzt, ein kleiner Teil wird aber in Form einer Ultraschallwelle abtransportiert.

Man unterscheidet zwischen zwei verschiedenen Anregungsmechanismen: die thermoelastische Anregung und die Anregung durch Impulsübertrag. Die thermoelastische Ultraschallanregung kann vollständig durch die lokale Absorption, Erwärmung und thermische Ausdehnung erklärt werden. Sie bestimmt die Ultraschallquelle im Falle geringer Laserpulsintensität. Wird die Intensität erhöht, so kommt es zum Abplatzen von anhaftenden Schichten, zur Materialverdampfung und Plasmabildung. Dieses ist der Anregungsmechanismus mit der größten praktischen Bedeutung, wobei die Beeinflussung der Oberfläche bei Stahl auf eine Schicht im Mikrometerbereich beschränkt bleibt. Die durch Laserpulse erzeugten Ultraschallschwingungen zeichnen sich durch eine komplexe räumliche wie zeitliche Struktur aus. Bei der Anregung durch Impulsübertrag werden dominant Longitudinalpulse hoher Bandbreite erzeugt, die sich senkrecht zur Oberfläche ausbreiten und im Werkstück in bekannter Art und Weise als Puls-Echofolge reflektiert werden. Die Oberflächenschwingungen in Normalenrichtung können nun interferometrisch - durch Ausnutzung des Doppler-Effektes - als Phasen- oder Frequenzmodulation gemessen werden. Mit anderen Worten, die Oberflächenschwingungen in Normalenrichtung führen durch den Doppler-Effektes zu einer Phasen- bzw. Frequenzmodulation des Lichtes und können interferometrisch in ein Amplituden moduliertes Signal gewandelt werden das mit einem Photodetektor gemessen werden kann.

Zum Nachweis der Ultraschallauslenkungen, welche typischerweise im Bereich weniger Angström bis Nanometer liegen, eignen sich eine Vielzahl unterschiedlicher Typen von Interferometern. Allerdings schränken an technischen Oberflächen die mit der Laserstrahlung unweigerlich verbundenen Speckleeffekte die Auswahl erheblich ein. Bei schnell bewegten Oberflächen standen bisher Laufzeitinterferometer sowie Fabry-Pérot-Interferometer zur Verfügung. Das Laufzeitinterferometer ist sehr groß und dadurch praktisch schlecht einsetzbar.

Diese Art der Ultraschall-Wandlung bietet die folgenden wesentlichen Vorteile gegenüber den verbreiteten piezoelektrischen Ultraschall-Wandlern:

- Die Prüfung bzw. die Wanddickenmessung kann berührungslos durchgeführt werden
- es ist kein Koppelmedium erforderlich
- schnell bewegtes Material kann geprüft werden
- heißes Material kann untersucht werden
- Da der Schall an der Oberfläche des Materials selbst entsteht, bzw. die Schwingung der Oberfläche detektiert wird, werden die Ankoppelprobleme, die beim Einsatz von konventionellen piezo-elektrischen Ultraschall-Wandlern entstehen, vermieden.

Die wesentlichen Nachteile gegenüber den verbreiteten piezoelektrischen Ultraschall-Wandlern sind:

- Die Sendewiederholrate ist klein und liegt bspw. unter 100Hz.

- Die Empfindlichkeit der Systeme ist kleiner als bei den piezoelektrischen Ultraschall-Wandlern.

- Der Preis für ein einkanaliges Prüfsystem ist sehr hoch.

Der Wirkungsgrad der Wandlung von optischer in Ultraschall-Energie ist sehr schlecht. Deshalb muss die Leistung, z.B. 360mJ/Sendepuls, der Sende-Laser bei den bekannten Systemen sehr groß sein bzw. die Pulswiederholrate ist klein, bspw. unter 100 Hz, da die vorhandene Laserleistung auf die erzeugten Sendepulse verteilt wird. Bei der Verwendung von Laser-Laser-Ultraschall-Systemen empfängt man deshalb Signale mit einem schlechten Signal/Rausch-Verhältnis bei niedriger Pulswiederholrate.

Die EP 1 679 513 A2 beschreibt ein Verfahren und ein System zum Messen eines physikalischen Parameters einer Schicht eines Prüfobjekts, bei dem zwei Pulse von elektromagnetischer Energie auf die Oberfläche des Artikels gerichtet werden und die so erzeugten Ultraschallimpulse werden zur Messung des Parameters ausgewertet.

Aufgabe der Erfindung ist die Entwicklung einer neuen Prüf- und Messtechnik, die einerseits die Probleme, die bei bekannten Verfahren auftreten, vermeidet und andererseits relativ preiswert herstellbar ist.

Diese Aufgabe wird durch ein Ultraschallprüfsystem mit den Merkmalen des Anspruchs 1 gelöst. Vorteilhafte Ausführungsformen sind in den Unteransprüchen und der hier nachfolgenden Beschreibung wiedergegeben.

Erfindungsgemäß ist erkannt worden, dass die Sendeeinheit in einem Ultraschallprüfsystem eine Funkenstrecke erzeugt, die an der Oberfläche und/oder im Prüfobjekt eine Ultraschallschwingung erzeugt, und dass die Empfängereinheit optisch die Schwingung der Oberfläche des Prüfobjekts misst.

Zur Ultraschall-Erzeugung wird eine Funkenstrecke, also ein durch eine elektrische Entladung entstehendes Plasma erzeugt. Die Funkenstrecke wird zwischen der Sendeeinheit und der Oberfläche des Prüfobjekts gezündet und übertragen. Das Plasma der Funkenstrecke, das bei der Entladung entsteht, trifft dabei auf die Oberfläche und erzeugt den für die Ultraschallmessung benötigten Druckimpuls auf der Oberfläche.

Die Sendeeinheit weist dazu mindestens eine Zündspule und eine Steuerelektronik zum Zünden der Zündspule zu vorgegebenen Zeiten auf. Die hierzu notwendige Elektronik, insbesondere eine Zündspule oder ein Zündkondensator und Steuerelektronik, ist sehr preiswert herstellbar und kann deshalb mehrfach ausgelegt werden. Der Wirkungsgrad der Wandlung von elektrischer in Ultraschall-Energie ist sehr viel besser als bei der Wandlung von optischer in Ultraschall-Energie. Daher kann auch eine Vielzahl von Sendeeinheiten, insbesondere von mehr als 100 Sendeeinheiten eingesetzt werden, um eine genügend große Prüfbreite zu erzielen.

Der elektromagnetische Puls, der beim Senden erzeugt wird, beeinflusst das optische System der Empfangseinheit nicht negativ und deshalb kann es mit der Funkenstrecke gut kombiniert werden. Das Licht des Funkens kann bevorzugt durch eine geeignete Abschirmung zwischen dem Auftreffbereich des Funkens und dem Messbereich der optischen Empfängereinheit abgeschattet werden, um eine Beeinflussung der Messung zu verringern.

Zum Ultraschall-Empfang kann insbesondere ein kommerziell erhältliches Laser-Ultraschall-Empfangssystem eingesetzt werden, das dadurch gekennzeichnet ist, dass ein Beleuchtungslaser vorgesehen ist, dessen Licht die Oberfläche in einem Messbereich beleuchtet, wobei die Empfängereinheit Licht empfängt, das von dem Messbereich in die Empfängereinheit einfällt. Insbesondere kann eine Vielzahl von Empfangseinheiten, insbesondere von mehr als 100 Empfängereinheiten vorgesehen sein. Damit können ebenfalls größere Prüfbreiten erreicht werden, wobei vorzugsweise die Vielzahl an Empfangseinheiten an die Vielzahl von Sendeeinheiten angepasst ist.

Das Ultraschallprüfsystem ist gekennzeichnet durch einen Beleuchtungslaser und Messbereiche, wobei jeweils einer Empfängereinheit ein Messbereich zugeordnet ist, so dass die Empfängereinheit Licht empfängt, das von dem Messbereich in die Empfängereinheit einfällt, wobei ein Lichtleitsystem das Licht des Lasers in einer ersten Stellung des Lichtleitsystems in einen ersten Messbereich und in einer zweiten Stellung des Lichtleitsystems in einen zweiten Messbereich einstrahlt. Somit können zwei oder mehr, insbesondere ca. 100 Messbereiche mit einer Anordnung aus einem Beleuchtungslaser und einer Empfängereinheit genutzt werden.

Sollen viele Empfangskanäle, z.B. bei der Grobblechprüfung, benutzt werden, kann ein Lichtleitsystem das Licht des Laser teilen und in einen Messbereich und in einen anderen Messbereich, insbesondere in viele verschiedene Messbereiche einstrahlen. Dabei kann ein Laser-Ultraschall-Empfangssystem über optische Multiplexer oder Matrixschalter mit Lichtleitfasern mit vielen Empfangsoptiken verbunden werden.

In weiter bevorzugter Weise weist die Empfängereinheit ein Interferometer auf oder ein Lichtleitsystem leitet Licht, das in die Empfängereinheit einfällt, an ein Interferometer weiter.

Verwendet man ein Sendesystem mit höherem Wirkungsgrad, z.B. eine Funkenstrecke, kann die Primärleistung des Sendesystems erheblich geringer ausfallen, die Pulswiederholrate gesteigert und die Systemkosten deutlich gesenkt werden. Beim Aufbau von vielen preiswerten parallelen Sendesystemen und der sequenziellen Nutzung eines Laser-Ultraschall-Empfangssystems kann damit in Summe eine sehr viel höhere Abtastrate bei vielen parallelen Prüfspuren und relativ geringen Kosten pro Prüfkanal verwirklicht werden.

Laseroptische Ultraschall-Empfangssysteme arbeiten mit Beleuchtungslasern, meistens Nd:YAG-Lasern, im Dauerstrichbetrieb bei verhältnismäßig kleiner Leistung von ca. 500 mW - 2 W.

Das Empfangssystem kann bei einem einzigen Prüfkanal, also einer Empfängereinheit, die nur einen einzigen Messbereich betrachtet, verglichen mit der konventionellen Ultraschall-Technik, teuer sein. Durch den Einsatz von optischen Multiplexern kann man ein laseroptisches Ultraschall-Empfangssystem für N Empfangsstellen bzw. Empfängereinheiten verwenden. Hierdurch ist der Aufbau eines preiswerten Ultraschall-Systems möglich, da der Preis pro Empfangskanal bzw. Empfängereinheit sehr niedrig wird.

Eine Abschätzung der Anzahl der Empfangskanäle pro Laseroptischen-Ultraschall-Empfangssystem für die Grobblechprüfung ergibt Folgendes:

  Schalllaufweg: max. 2 * 100 mm
  Schallgeschwindigkeit: 5920 m/s
  zu detektierendes Signalfenster: 33,8 μs

Hieraus ergibt sich eine maximale mögliche Signalwiederholrate von ca. 30 kHz wenn die einzelnen Signalfenster zeitlich richtig aneinander gehängt werden. Wenn man eine Pulswiederholrate von 100 Hz pro Prüfspur annimmt, also mit einer Auflösung von 10 mm bei 1m/s Transportgeschwindigkeit, ergeben sich maximal 300 parallele Prüfspuren, wenn man die Schaltzeit des optischen Multiplexers vernachlässigt. Bei dieser Konstellation kann man also durch entsprechende Ansteuerung der Sender beziehungsweise Auswahl des entsprechenden optischen Multiplexereingangs, mit einem laseroptischen Ultraschall-Empfangssystem, 300 Prüfspuren mit je 100 Hz Pulswiederholrate verarbeiten.

Zum Vergleich: konventionelle Piezo-Testsysteme arbeiten bspw. mit 288 (GE Inspection Technologies) bzw. 216 (NDT Systems & Services) Empfangsspuren mit je 12,5 mm bzw. 16,6 mm Spurbreite.

Die Empfindlichkeit eines oben erwähnten Fabry-Perot-Interferometer Empfangssystems für Laser-Ultraschall kann folgendermaßen beschrieben werden:

$$SNR = K \cdot S \cdot U \cdot \sqrt{\frac{P_{det} \cdot \eta}{\lambda \cdot B}}$$

SNR = Signal-Rausch-Verhältnis
S  = Interferometer Empfindlichkeit ( < 1 )
U  = Ultraschall Oberflächenauslenkung (abhängig vom Sender)
$P_{det}$ = Lichtleistung am Detektor (abhängig von: Größe der Lichtsammeloptik; Stärke des Beleuchtungslasers; Abstand Empfangsoptik-Oberfläche )
η  = Quanteneffizienz am Detektor ( > 50% )
λ  = optische Wellenlänge
B  = Detektionsbandbreite
K  = Konstante

Das maximale SNR wird zusätzlich durch das Rauschen des Empfangs-Beleuchtungs-Lasers begrenzt. Das Amplitudenrauschen und das Phasenrauschen des Empfangslasers sind hierbei die wesentlichen Rauschquellen. Fabry-Pérot-Interferometer mit einem Resonator erreichen ein SNR von ca. 26 dB. Fabry-Perot-Interferometer mit zwei Resonatoren erreichen ein SNR von ca. 45 dB, da das Amplitudenrauschen durch eine Differenzmesstechnik eliminiert werden kann.

Die Systeme mit zwei Resonatoren sind für die Prüftechnik bei mittlerer Fehlerempfindlichkeit einsetzbar. Die Systeme mit einem Resonator sind eigentlich nur zur Wanddickenmessung geeignet.

Des Weiteren ist ein Laser-Ultraschall-Empfangssystem bekannt, das statt eines optischen Interferometers einen photorefraktiven Kristall verwendet. Der photorefraktive Effekt beschreibt die lichtinduzierte Brechzahländerung in photoleitenden, elektrooptischen Kristallen. Dieses Empfangssystem ist für den Einsatz unter Betriebsbedingungen besonders geeignet.

Mit diesem Interferometertyp sind SNR von ca. 70 dB erreichbar. Beim Einsatz eines Differenzdetektors kann das Amplitudenrauschen beseitigt werden. Außerdem kann das Phasenrauschen beseitigt werden, wenn die optische Weglänge des Signal- und Referenzstrahls gleich lang ist.

Dieses Interferometer kann sehr kompakt aufgebaut werden, reagiert weniger empfindlich auf Umgebungserschütterungen und benötigt keine aktive Stabilisierung.

Um ein interferometrisches Empfangssystem an vielen Empfangsstellen betreiben zu können benötigt man geeignete optische Schalter.

Optische Schalter arbeiten mit unterschiedlichen Verfahren. Ein elektromechanisches Verfahren, das mit mikroskopisch kleinen Spiegeln arbeitet, den Micro Electromechanical Mirrors (MEM). Bei diesem Verfahren werden die Mikrospiegel in ihren Achsen gekippt.

Ein anderes Verfahren arbeitet mit durchlässigen Spiegeln. Dabei können die Spiegel reflektieren oder als nichtreflektierende Scheibe die Lichtsignale durchlassen.

Andere Verfahren arbeiten rein optisch auf der Basis von optischen Kopplern oder optischen Schaltnetzwerken, wieder andere auf der Technik von Flüssigkristallen oder Bubble-Jets. Bei letztgenannter Technik werden beim Schaltvorgang Kammern, sog. Bubbles, mit einer Flüssigkeit gefüllt, die einen anderen Brechungsindex als die ungefüllten Kammern haben.

Mit diesen Techniken können derzeit Schaltzeiten im Bereich von etwa 10 ms - 20 ps erreicht werden.

Der Wunsch, die zerstörungsfreie Prüfung in eine frühe Stufe der Produktion zu integrieren, bietet in einem beträchtlichen Umfang Kosteneinsparungen bei Energie und Material und eine Produktverbesserung. Die Verfolgung dieses Trends bis zu seiner logischen Konsequenz in der Herstellung von Stahlprodukten impliziert die Prüfung der Produktqualität möglichst während des Produktionsprozesses.

Die beschriebene Prüftechnik erlaubt die kontinuierliche und automatische Qualitätsprüfung bei hoher Geschwindigkeit in einer rauen Industrieumgebung.

Als Teil der Qualitätssteuerung bietet die zuverlässige zerstörungsfreie Prüfung von Innen- und Oberflächenfehlern vor der Weiterverarbeitung beträchtliche Vorteile:

Die Verfügbarkeit zuverlässiger Informationen über die Produktqualität in einer frühen Produktionsstufe trägt nicht nur zur Endproduktqualität bei, sondern bildet auch eine Basis für das Festsetzen optimierter Produktionsparameter, die die Produktivität und Qualität in der Weiterverarbeitung bedeutend erhöhen können.

Denkbare Anwendungen sind:

- Wanddickenmessung bei vielen Mess-Spuren während der Produktion, z.B. während der Rohrherstellung.
- Ultraschall-Fehlerprüfung und Wanddickenmessung an Grobblechen und schwer prüfbarem, insbesondere heißem oder schnell bewegtem Material während der Produktion, z.B. während der Knüppel- oder Schmiedeteilherstellung.
- Verbesserung der Ankoppelbedingungen bei vielen Prüfaufgaben und hierdurch Reduzierung der Pseudofehleranzeigen, z.B. bei der Grobblechprüfung.

Durch die berührungslose Prüfung und den Verzicht auf ein Koppelmedium kann der mechanische Aufwand z.B. bei der Grobblechprüfung erheblich verkleinert werden und hierdurch ergeben sich zusätzlich enorme Einsparpotenziale.

Durch die verbesserte Mess- und Prüftechnik können die Produktionsprozesse in engeren Grenzen gefahren werden, was zur Steigerung der Qualität und zur Erhöhung des Ausbringens führen wird. Letzteres ist eine der effizientesten Methoden zur Stärkung der Nachhaltigkeit industrieller Produktion, da hierdurch weniger Material produziert werden muss und dadurch Rohmaterial und Energie eingespart und Emissionen verhindert werden. Die Entwicklung ist für alle Stahlproduzenten und Produzenten von NE-Metallen nutzbar.

Eine Sendeeinrichtung für ein Ultraschallprüfsystem zum Prüfen eines Prüfobjekts mit mindestens einer Sendeeinheit ist so ausgebildet, dass die Sendeeinheit Mittel zum Erzeugen einer Funkenstrecke vorgesehen sind, wobei die Funkenstrecke an der Oberfläche und/oder im Prüfobjekt eine Ultraschallschwingung erzeugt.

Die Ultraschallerzeugung mittels Funkenübertragung auf das Prüfobjekt ist effektiver, weil die Herstellung als auch der Betrieb der Sendeeinrichtung preiswerter als bei der aus dem Stand der Technik bekannten Technik der Laser-Ultraschallerzeugung oder der Piezo-Ultraschallerzeugung sind. Der starke Impuls des Plasmas des Funkens kann sehr genau gesteuert werden, sowohl der Zeitpunkt als auch die Zeitdauer sind exakt einstellbar. Die Genauigkeit des Schaltzeitpunkts und die Schaltdauer können dabei innerhalb weiter Grenzen eingestellt werden.

In bevorzugter Weise weist die Sendeeinheit eine Zündspule und eine Steuerelektronik zum Zünden der Zündspule zu vorgegebenen Zeiten auf. Diese Ausführung der Sendeeinheit kann in vorteilhafter Weise auf der Seite der Niedrigspannung geschaltet werden, so dass der Aufwand an Elektronik gering ist.

Ebenso kann die Sendeeinheit auch einen Zündkondensator und eine Steuerelektronik zum Aufladen und Entladen des Zündkondensators zu vorgegebenen Zeiten aufweisen. Hier muss zwar die Hochspannung schnell geschaltet werden, was einen größeren Aufwand benötigt, aber die Schaltgenauigkeit wird durch die Ausgestaltung weiter erhöht werden.

Ein Empfangssystem für ein Ultraschallprüfsystem zum Prüfen eines Prüfobjekts weist einen Laser zum Beleuchten von mindestens zwei Messbereichen auf der Oberfläche des Prüfobjekts und mindestens zwei Empfängereinheiten zum optischen Messen der Schwingung der Oberfläche des Prüfobjekts auf. Weiterhin sind ein Interferometer und ein Empfangs-Lichtleitsystem vorgesehen, das in verschiedenen Stellungen jeweils Licht von verschiedenen Messbereichen auf das Interferometer leitet. Dabei bilden das Interferometer und das Empfangs-Lichtleitsystem in jeweils einer der Stellungen eine Empfängereinheit.

In dieser Ausgestaltung des Empfangssystems wird eine Vielkanal-Anordnung dadurch realisiert, dass jedem Messbereich ein Teil des Empfangs-Lichtleitsystem in einer Stellung zugeordnet ist. Dieser Teil kann also wahlweise angesteuert werden, so dass in dieser Stellung des Empfangs-Lichtleitsystems das aufgenommene Licht auf das Interferometer geleitet wird. Das Lichtleitsystem kann aus beliebigen optischen Komponenten bestehen, bspw. Spiegelanordnungen.

In einem Empfangssystem sind mindestens zwei Lichtleiter, die jeweils einen der Messbereiche erfassen, und ein optischer Schalter vorgesehen, der Licht aus jeweils einem der Lichtleiter auf das Interferometer leiten kann. Je nach Stellung des optischen Schalters wird dann das von einem bestimmten Messbereich von einem Lichtleiter aufgenommene Licht auf das Interferometer geleitet. Durch Umschalten des optischen Schalters können dann nacheinander die verschiedenen Messbereiche erfasst werden, wobei jeweils das gleiche Interferometer genutzt wird. Durch diese Art des Multiplexings kann eine Vielzahl von Messbereichen nacheinander aufgenommen werden.

Wie bereits oben ausgeführt worden ist, kann man bei dieser Konstellation durch eine entsprechende Ansteuerung des optischen Multiplexers mit einem laseroptischen Ultraschall-Empfangssystem beispielsweise 300 Prüfspuren mit je 100 Hz Pulswiederholrate verarbeiten.

In einem Empfangssystems strahlt ein Lichtleitsystem das Licht des Lasers in verschiedenen Stellungen in verschiedene Messbereiche ein. Ähnlich wie auf der Detektionsseite des Empfangssystems kann das Laserlicht durch ein Lichtleitsystem so auf den Prüfkörper geleitet werden, dass nur in jeweils dem Messbereich Laserlicht einstrahlt, von dem aktuell auch durch das Empfangs-Lichtleitsystem Licht empfangen wird. Somit kann die Laserleistung gezielt dort eingesetzt werden, wo das Licht genutzt wird. Dadurch kann entweder eine insgesamt geringere Laserleistung zum Einsatz kommen, oder eine vorhandene Laserleistung kann effektiver eingesetzt werden. Das Lichtleitsystem kann auch hier aus beliebigen optischen Komponenten bestehen, bspw. Spiegelanordnungen.

In einem Empfangssystem sind mindestens zwei Lichtleiter vorgesehen, die jeweils einem der Messbereiche zugeordnet sind, und ein optischer Schalter leitet das Laserlicht wahlweise in jeweils einen der Lichtleiter. Dieses effektiv arbeitende Beleuchtungssystem kann durch schnelle Schaltvorgänge das Laserlicht so verteilen, dass bspw. die oben genannten 300 Prüfspuren mit je 100 Hz Pulswiederholrate verarbeitet werden können.

Eine Sendeeinrichtung und ein Empfangssystem können zusammen in einem Ultraschallprüfsystem der oben beschrieben Art zusammen eingesetzt werden. Durch zwei aufeinander abgestimmte optische Systeme, die insbesondere mittels optischer Schalter ein optisches Mehrkanalsystem ermöglichen, können große Bandbreiten bei schnellen Laufgeschwindigkeiten geprüft werden.

Das zuvor beschriebene Ultraschallprüfsystem kann mit einem Verfahren betrieben werden, bei dem Ultraschallwellen in einem Prüfkörper mit einer Sendeeinrichtung mit mindestens zwei parallel arbeitenden Sendeeinheiten mittels Funkenstrecken erzeugt werden, bei dem das Ultraschallsignal durch ein Empfangssystem mit mindestens zwei optischen Empfängereinheiten gemessen wird, bei dem jeweils eine Sendeeinheit und eine Empfangseinheit einander zugeordnet werden, bei dem die einander zugeordneten Sendeeinheit und Empfangseinheit zeitlich aufeinander abgestimmt aktiviert werden und

bei dem ein Raster von Messpunkten durch eine serielle Ansteuerung der Sendeeinrichtung und der Empfangseinheit auf dem Prüfkörper vermessen wird.

Weitere Merkmale und Vorteile dieses Verfahrens sind in der vorangegangenen und der nachfolgenden Beschreibung aufgeführt.

Nachfolgend wird die Erfindung näher erläutert, wobei auf die beigefügte Zeichnung Bezug genommen wird. Es zeigen

Fig. 1     ein Ausführungsbeispiel eines erfindungsgemäßen Ultraschallprüfsystems mit einer Sendeeinrichtung und einem Empfangssystem und

Fig. 2-4     graphische Darstellungen von Messsignalen.

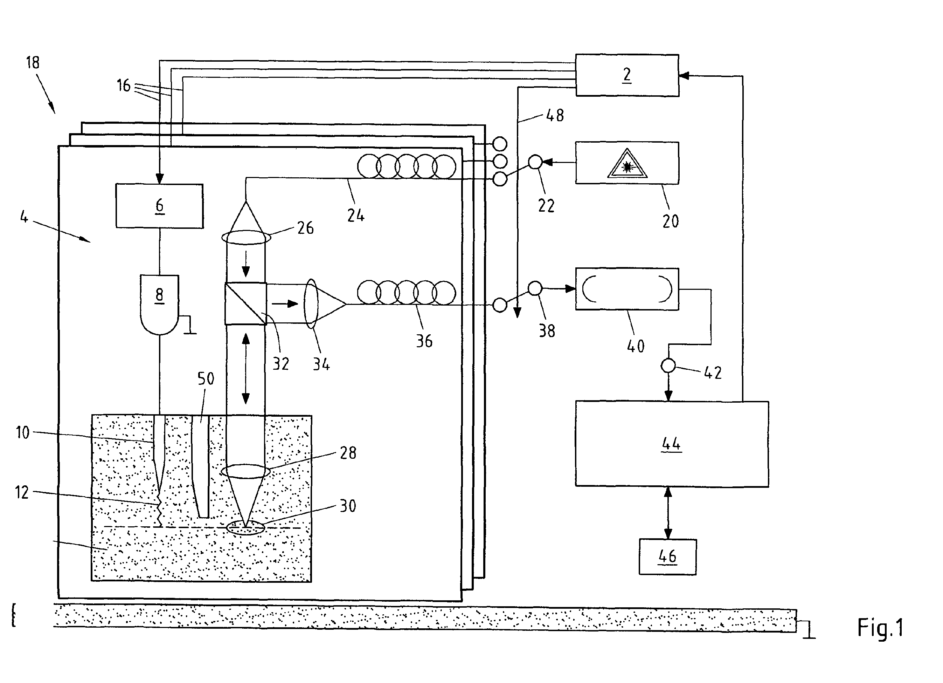

Fig. 1 zeigt ein erfindungsgemäßes Ultraschallprüfsystem, das sowohl mit einer Sendeeinrichtung also auch mit einem Empfangssystem ausgestattet ist. Darüber hinaus kann mit diesem Ultraschallprüfsystem ein Verfahren durchgeführt werden.

Die in Fig. 1 dargestellt Messanordnung weist zunächst eine Steuerung 2 auf, die die Steuerung der nachfolgend beschriebenen Komponenten des Ultraschallprüfsystems vornimmt und koordiniert.

Zunächst wird die Funktionsweise einer Sendeeinrichtung 4 für ein Ultraschallprüfsystem zum Prüfen eines Prüfobjekts erläutert. Die Sendeeinrichtung 4 weist eine Sendeelektronik 6, eine Zündspule 8 und eine Elektrode 10 auf, die zusammen eine Sendeeinheit bilden. Die Zündspule 8 stellt zusammen mit der Elektrode 10 Mittel zum Erzeugen einer Funkenstrecke 12 dar, wobei die Funkenstrecke 12 an der Oberfläche und/oder im Prüfobjekt 14 eine Ultraschallschwingung erzeugt.

Die Steuerung 2 überträgt über eine Leitung 16 ein Steuersignal auf die Sendeelektronik 6, wodurch ein genauer zeitlicher Ablauf, insbesondere in Bezug auf den Zündzeitpunkt und die Zünddauer, zur Erzeugung der Funkenstrecke 12 erreicht wird. Die Sendeelektronik 6 unterbricht den Gleichstrom auf der Primärseite eines in der Zündspule angeordneten Transformators, wodurch auf der Sekundärseite durch das zusammenbrechende Magnetfeld ein für das Erzeugen der Funkenstrecke 12 ausreichende Spannung erzeugt wird.

Anstelle einer Zündspulenanordnung kann auch ein Zündkondensator vorgesehen sein, wobei allerdings die von der Steuerelektronik 6 erzeugte Spannung an sich ausreichen muss, um den Kondensator so stark aufzuladen, um die Funkenstrecke zünden zu können.

In Fig. 1 ist mit drei schematischen Ebenen 18 angedeutet, dass eine Vielzahl von Sendeeinheiten parallel nebeneinander angeordnet ist. Dabei ist der Begriff "Ebene" nicht so zu verstehen, dass die dort angeordneten geometrisch in einer Ebene angeordnet sind, sondern dass jede "Ebene" eine separate Anordnung aufweist und verschiedenen Anordnungen parallel zueinander angeordnet sind.

In jeder Ebene 18 sind eine Sendeelektronik 6, eine Zündspule 8 und eine Elektrode 10 vorgesehen, die über eine der Leitungen 16 von der Steuerung 2 angesteuert werden. Somit können die parallel zueinander angeordneten Sendeeinheiten seriell Funkenstrecken 12 erzeugen, um Ultraschallimpulse an verschiedenen Stellen auf der Oberfläche des Prüfkörpers 14 zu induzieren.

Die Sendeeinrichtung kann aus einer oder mehreren Sendeeinheiten bestehen, je nach Anforderung an den zu messenden Prüfkörper.

Fig. 1 zeigt auch ein Empfangssystem für ein Ultraschallprüfsystem. Ein Laser 20 erzeugt einen Laserstrahl, der mittels eines optischen Schalters 22 in einen Lichtleiter 24, bzw. Lichtwellenleiter (LWL), eingeleitet wird. Der Lichtleiter 24 überträgt in einer ersten Ebene 18 mittels einer geeigneten Optik 26 und 28 das Licht auf einen Messbereich 30.

Das vom Messbereich 30 reflektierte Licht wird mittels eines Strahlteilers 32 aus dem Lichtweg ausgekoppelt, und mittel einer geeigneten Optik 34 in einen Lichtleiter 36 eingespeist. Ein optischer Schalter 38 koppelt dann das Licht aus dem Lichtleiter 36 aus und leitet es in ein Interferometer 40. Ein Detektor 42 erzeugt ein Ausgangssignal, das auf eine Auswerteeinheit 44 übertragen wird. Dort findet in herkömmlicher Weise eine Signalauswertung mit A/D-Wandlung und Echtzeit-Signalverarbeitung statt, dessen Ergebnis auf einen Computer 46 übertragen wird.

Findet eine Oberflächenschwingung, bspw. aufgrund einer sich im Prüfkörper ausbreitenden Ultraschallwelle statt, so kommt es zu einer Doppler-Verschiebung des reflektierten Lichts, insbesondere in Normalenrichtung. Diese Phasen- bzw. Frequenzmodulierten Lichtschwingungen werden dann interferometrisch - in ein Amplituden moduliertes Signal gewandt das mit einem Photodetektor gemessen werden kann.

Der zuvor erläuterte Aufbau ist in einer Vielzahl von Ebenen 16 vorgesehen, in denen jeweils eine zuvor beschriebene Empfangseinheit angeordnet ist, um eine Vielzahl von Messbereichen 30 erfassen zu können. Die Steuerung 2 steuert dann über eine Leitung 48 die beiden optischen Schalter 22 und 38 so an, dass diese verschiedene Stellungen annehmen. Somit wird gleichzeitig das Laserlicht in den Lichtleiter 24 eingeleitet und das durch den Lichtleiter 36 aufgenommene reflektierte Licht auf das Interferometer 40 geleitet. Beide Lichtleiter 22 und 38 sind somit gleichzeitig "aktiv". Durch ein abwechselndes Aktivschalten der jeweiligen Lichtwege und somit der nebeneinander angeordneten Empfangseinheiten wird somit ein Multiplexing des Empfangssystems erreicht.

Fig. 1 zeigt darüber hinaus auch das Zusammenwirken der Sendeeinrichtung und des Empfangssystems des Ultraschallprüfsystems.

Die Steuerung 2 übernimmt die Synchronisierung der Sendeeinrichtung und des Empfangssystems. Zu einem vorgegebenen Zeitpunkt wird in einer der Ebenen 18 die Sendeelektronik 6 angesteuert, um mittels der Zündspule 8 und der Elektrode 10 eine Funkenstrecke 12 mit definiertem Anfangs- und Endzeitpunkt zu erzeugen. Die Funkenstrecke 12 induziert einen Ultraschallimpuls im Prüfkörper 14.

Bevorzugt im Zeitpunkt der Erzeugung der Funkenstrecke 12, jedenfalls in einem definierten zeitlichen Abstand dazu, wird das Empfangssystem und insbesondere die optischen Schalter 22 und 38 so angesteuert, dass das Empfangssystem in der gleichen Ebene 18 aktiv ist und eine Oberflächenschwingung aufgrund des Ultraschallsignals misst. Die Komponenten des Empfangssystems in der jeweiligen Ebene 18 werden so lange aktiv geschaltet gelassen, dass eine für eine Laufzeitmessung genügend lange Zeitdauer verstrichen ist. Diese Zeitdauer hängt von der Materialparametern und der Dicke des Prüfkörpers ab und beträgt bspw. ca. 30 bis 50 μs.

Somit können zeitlich nacheinander sowohl die Sendeeinrichtung als auch das Empfangssystem in verschiedenen Ebenen aktiviert werden. Durch die zeitliche Abfolge des Aktivierens der Ebenen können nebeneinander liegende Messbereiche erfasst werden. Ein Raster von Messbereichen wird somit nacheinander erfasst. Bewegt sich der Prüfkörper quer zur Anordnung der Ebenen oder bewegen sich die Sende- und Empfangssysteme über den zu prüfenden Körper und entspricht die Breite der Anordnung der Ebenen bzw. die Bewegungsamplitude des Sende- und Empfangssystems im Wesentlichen der Breite des Prüfkörpers, dann kann sukzessive der gesamte Prüfkörper in einem engen Raster von Messbereichen überprüft werden.

Fig. 1 zeigt darüber hinaus, dass zwischen der Funkenstrecke 12 und dem Messbereich 30 eine Abschirmung 50 vorgesehen ist, die das beim Erzeugen der Funkenstrecke 12 auftretende intensive Licht gegenüber dem Messbereich 30 abschirmt. Daneben kann das Signal-zu-Rausch-Verhältnis noch durch den Einsatz von geeigneten optischen Bandfiltern verbessert werden, die bevorzugt nur den Wellenlängebereich des Laserlichts durchlassen. Beispielsweise kann ein solcher optischer Filter zwischen dem Strahlteiler 32 und der Linse 34 angeordnet sein.

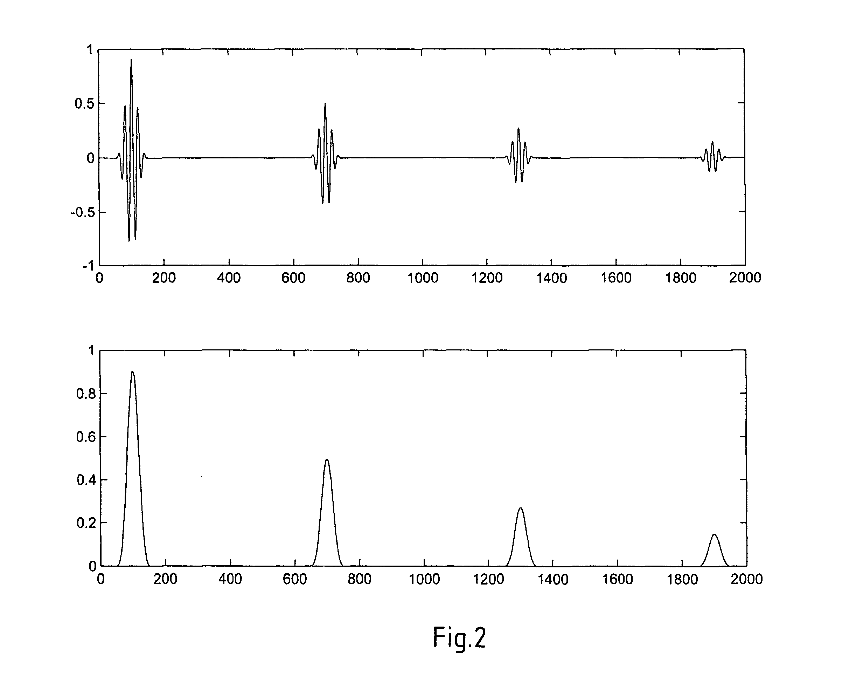

Die Fig. 2 bis 4 zeigen Beispiele von Signalen, die bei einer Laufzeitmessung aufgenommen werden. Jeweils oben ist das Ausgangssignal des Interferometers dargestellt, während die untere Kurve die Hüllkurve (z.B. das quadratur-demodulierte Signal bzw. den tiefpassgefilterten Verlauf der oberen Messkurve) zeigt. Die Beschriftung der x-Achse der Diagramme stellen die Abtastpunkte des Signals dar, die einer beliebigen Zeiteinheit entsprechen. Die y-Achse stellt jeweils die Intensität des Kurvenverlaufs in beliebigen Einheiten dar.

Fig. 2 zeigt ein idealisiertes, rauschfreies und ungestörtes Signal. In regelmäßigen Zeitabständen ist eine Schwingung zu erkennen, deren Amplitude von Auftreten zu Auftreten geringer wird. Diese Schwingungen werden durch das Ultraschallsignal erzeugt, das mehrfach an der der beobachteten Oberfläche gegenüberliegenden Oberfläche des Prüfkörpers reflektiert wird. Durch das mehrfache Durchlaufen des Prüfkörpers nimmt die Amplitude des Signals ab. Der in Fig. 2 dargestellte Signalverlauf ist ungestört, da nur die regelmäßig auftretenden Schwingungssignale auftreten.

Aus den Abständen der Maxima in der unteren Kurve kann bei bekannter Schallgeschwindigkeit innerhalb des Prüfkörpers die Dicke des Prüfkörpers berechnet werden.

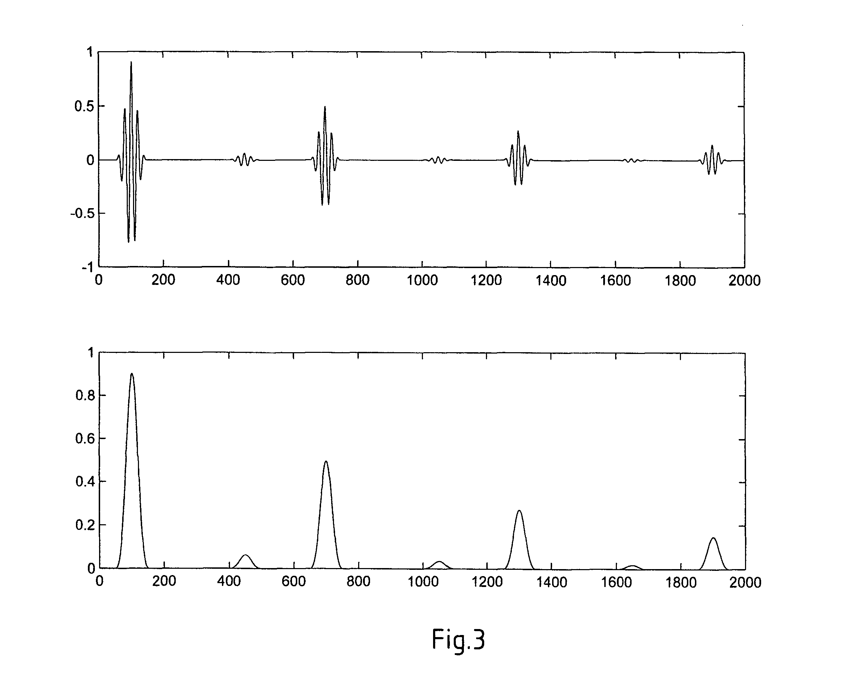

Fig. 3 zeigt ein idealisiertes, rauschfreies, jetzt aber gestörtes Signal dar. In regelmäßigen Zeitabständen ist zunächst eine Schwingung wie in Fig. 2 zu erkennen, deren Amplitude von Auftreten zu Auftreten geringer wird. Zwischen jeweils zwei Schwingungszyklen sind jeweils kleinere Signale zu erkennen, die auf eine kürzere Laufzeit des Ultraschallsignals innerhalb des Prüfkörpers hindeutet. Ein solches zusätzliches Signal kann von einer Störung innerhalb des Prüfkörpers herrühren, das zu einer Reflektion der Ultraschallwelle im Bereich zwischen den beiden Oberflächen herrührt. Somit kann dieses zusätzliche Signal bzw. deren Häufigkeit und Amplitude des Auftretens als Maß für die Qualität des Prüfkörpers herangezogen werden.

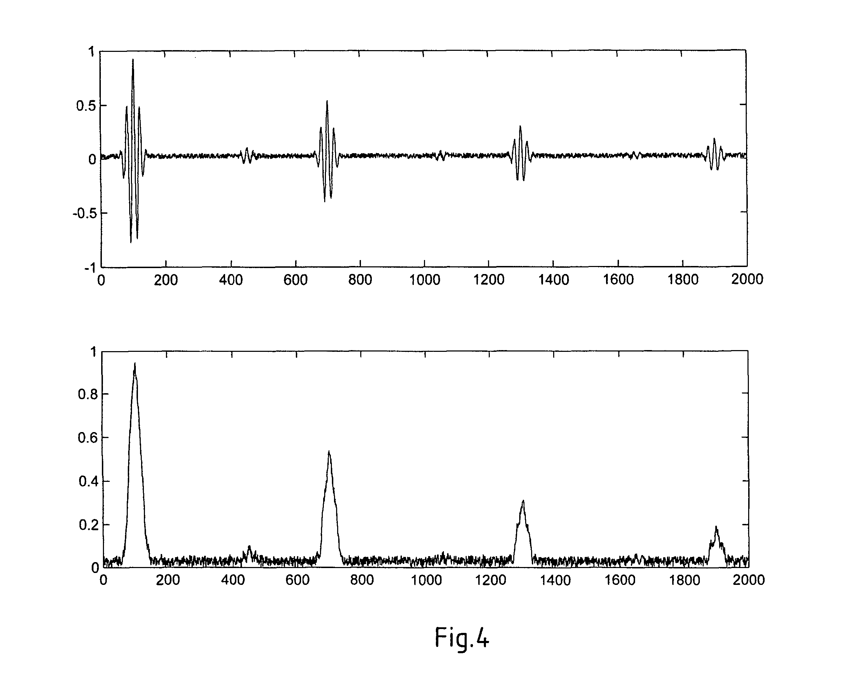

Fig. 4 zeigt schließlich das in Fig. 3 dargestellt Signal mit einem überlagerten Rauschen, so dass diese Messkurven einen realistischen Fall darstellen. Es ist zu erkennen, dass die Bestimmung der Maxima durch das Rauschen erschwert wird. Daher wird bei der Auswahl des Interferometers immer auf das damit zu erzielende Signal-zu-Rauschen-Verhältnis geachtet.

## Patentansprüche

1. Ultraschallprüfsystem zum Prüfen eines Prüfobjekts mit mindestens einer Sendeeinheit (6, 8, 10) und einer Vielzahl von Empfängereinheiten (40),

   - wobei jede Empfängereinheit (40) optisch die Schwingung der Oberfläche des Prüfobjekts misst,
   - wobei ein Beleuchtungslaser (20) vorgesehen ist, dessen Licht die Oberfläche in einem Messbereich (30) beleuchtet,
   - wobei die Empfängereinheit (40) Licht empfängt, das von dem Messbereich (30) in die Empfängereinheit (40) einfällt,
   - wobei jeweils einer Empfängereinheit (40) ein Messbereich (30) zugeordnet ist, so dass die Empfängereinheit (40) Licht empfängt, das von dem Messbereich (30) in die Empfängereinheit (40) einfällt,
   - wobei ein Lichtleitsystem (22, 24) das Licht des Lasers (20) in einer ersten Stellung des Lichtleitsystems (22, 24) in einen ersten Messbereich (30) und in einer zweiten Stellung des Lichtleitsystems (22, 24) in einen zweiten Messbereich (30) einstrahlt und
   - wobei ein Lichtleitsystem (22, 24) das Licht des Laser (20) teilt und in einen Messbereich (30) und in einen anderen Messbereich (30) einstrahlt,
   **dadurch gekennzeichnet,**
   - **dass** eine Vielzahl von Sendeeinheiten (6, 8, 10) vorgesehen ist, und
   - **dass** jede Sendeeinheit (6, 8, 10) eine Funkenstrecke (12) erzeugt, wobei die Funkenstrecke (12) an der Oberfläche und/oder im Prüfobjekt eine Ultraschallschwingung erzeugt.

2. Ultraschallprüfsystem nach Anspruch 1,
   **dadurch gekennzeichnet,**
   **dass** eine Sendeeinheit eine Zündspule (8) und eine Steuerelektronik (6) zum Zünden der Zündspule (8) zu vorgegebenen Zeiten aufweist.

3. Ultraschallprüfsystem nach Anspruch 1 oder 2, **dadurch gekennzeichnet, dass** die Empfängereinheit ein Interferometer (40) aufweist oder ein Lichtleitsystem (22, 24) Licht, das in die Empfängereinheit einfällt, an ein Interferometer (40) weiterleitet.

## Claims

1. Ultrasonic testing system for testing a test object comprising at least one transmitting unit (6, 8, 10) and a multitude of receiver units (40),

   - wherein each receiver unit (40) optically measures the vibrations of the surface of the test object,
   - an illumination laser (20) is provided, the light of which illuminates the surface in a measurement area (30),
   - wherein the receiver unit (40) receives light which is incident in the receiver unit (40) from the measurement area (30),

- wherein a measurement area (30) is associated with a respective receiver unit (40) so that the receiver unit (40) receives light which is incident in the receiver unit (40) from the measurement area (30),

- wherein a light guiding system (22, 24) radiates the light of the laser (20) in a first position of the light guiding system (22, 24) into a first measurement area (30) and in a second position of the light guiding system (22, 24) into a second measurement area (30) and

- wherein a light guiding system (22, 24) splits the light of the laser (20) and radiates it into a measurement area (30) and into another measurement area (30), **characterised in that**

- a multitude of transmitting units (6, 8, 10) is provided and

- each transmitting unit (6, 8, 10) generates a spark gap (12), said spark gap (12) generating an ultrasonic vibration on the surface and/or within the test object.

**2.** Ultrasonic testing system according to claim 1, **characterised in that** a transmitting unit comprises an ignition coil (8) and a control electronics (6) for igniting the ignition coil (8) at predetermined times.

**3.** Ultrasonic testing system according to either claim 1 or 2, **characterised in that** the receiver unit comprises an interferometer (40) or a light guiding system (22, 24) transmits light, which is incident in the receiver unit, to an interferometer (40).

## Revendications

**1.** Système de test par ultrasons pour tester un objet de test comprenant au moins une unité d'émission (6, 8, 10) et une pluralité d'unités de réception (40),

  - sachant que chaque unité de réception (40) mesure optiquement la vibration de la surface de l'objet de test,
  - sachant qu'est prévu un laser d'illumination (20), dont la lumière éclaire la surface de l'objet de test dans une zone de mesure (30),
  - sachant que l'unité de réception (40) reçoit la lumière, qui, de la zone de mesure (30), frappe dans l'unité de réception (40),
  - sachant qu'une zone de mesure (30) est associée à chaque unité de réception (40) de sorte que l'unité de réception (40) reçoit la lumière, qui frappe de la zone de mesure (30) dans l'unité de réception (40),
  - sachant qu'un système de guide optique (22, 24), dans une première position dudit système de guide optique (22, 24), dirige la lumière du laser (20) dans une première zone de mesure (30) et, dans une deuxième position du système de guide optique (22, 24), la dirige dans une deuxième zone de mesure (30), et

  - sachant qu'un système de guide optique (22, 24) divise la lumière du laser (20) et la dirige dans une zone de mesure (30) et dans autre zone de mesure (30), **caractérisé en ce que**
  - une pluralité d'unités d'émission (6, 8, 10) est prévue et
  - que chaque unité d'émission (6, 8, 10) constitue un éclateur (12), sachant que ledit éclateur (12) génère une vibration ultrasonore sur la surface et / ou à l'intérieur de l'objet de test.

**2.** Système de test par ultrasons selon la revendication 1, **caractérisé en ce qu'**une unité d'émission est dotée d'une bobine d'activation (8) et d'une commande électronique (6) pour activer la bobine d'activation (8) à des instants prédéterminés.

**3.** Système de test par ultrasons selon la revendication 1 ou 2, **caractérisé en ce que** l'unité de réception est dotée d'un interféromètre (40) ou qu'un système de guide optique (22, 24) transmet à un interféromètre (40) la lumière qui frappe dans ladite unité de réception.

Fig.1

Fig.2

Fig.3

Fig.4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1679513 A2